# EUROPEAN PATENT SPECIFICATION

(11) **EP 4 191 775 B1**
(45) Date of publication and mention of the grant of the patent: **05.08.2026**
(21) Application number: 22788481.4
(22) Date of filing: 14.04.2022
(51) Int. Cl.: H01M 10/052, H01M 50/105, H01M 50/121, H01M 50/186, H01M 50/30, H01M 50/557, H01M 50/578, H01M 50/129, H01M 50/178, H01M 50/193, H01M 50/325, H01M 50/342, H01M 50/55, H01M 50/375

(54) **SECONDARY BATTERY**
SEKUNDÄRBATTERIE
BATTERIE SECONDAIRE

(30) Priority: 14.04.2021 KR 20210048823
(43) Date of publication of application: 07.06.2023
(73) Proprietor: LG Energy Solution, Ltd., Seoul 07335 (KR)
(72) Inventor: KIM, Sang-Hun, Daejeon 34122 (KR); HWANG, Soo-Ji, Daejeon 34122 (KR); KANG, Min-Hyeong, Daejeon 34122 (KR); SONG, Dae-Woong, Daejeon 34122 (KR); YU, Hyung-Kyun, Daejeon 34122 (KR); LIM, Hun-Hee, Daejeon 34122 (KR)
(74) Representative: Plasseraud IP
(86) International application number: PCT/KR2022/005440
(87) International publication number: WO 2022/220626

(56) References cited:
- JP-A- 2018 053 180
- KR-A- 20030 066 895
- KR-A- 20110 131 259
- KR-A- 20170 007 876
- KR-B1- 101 452 945

## Description

### TECHNICAL FIELD

The present disclosure relates to a secondary battery, and more particularly, to a secondary battery having a vent member.

### BACKGROUND ART

Secondary batteries are highly applicable to various products and exhibit superior electrical properties such as high energy density, etc. Secondary batteries are commonly used not only in portable devices but also in electric vehicles (EVs) or hybrid electric vehicles (HEVs) driven by electrical power sources. The secondary battery is drawing attention as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like.

The secondary battery generally has a structure in which an electrode assembly including at least one unit cell having a positive electrode/separator/negative electrode structure is accommodated in a case of a laminate sheet in which an outer layer, a metal barrier layer and a sealant layer are sequentially laminated, and a sealant resin of the sealant layer is fused to seal the electrode assembly is sealed.

In the conventional secondary battery, the battery may ignite due to various causes such as a short circuit inside the secondary battery, overcharge or overdischarge, temperature control, or the like. At this time, thermal propagation where the temperature inside the secondary battery rises rapidly and simultaneously the heat is transferred to neighboring cells may be generated, which may further increase the fire.

In order to minimize damage to the electrode caused by gas when thermal propagation occurs - *i.e.,* when the internal temperature of the secondary battery rises, directional venting characteristic is required to discharge the gas in one direction. However, the conventional secondary battery has a problem in that it is difficult to induce gas discharge in a specific direction.

Therefore, the present disclosure is directed to providing a secondary battery with improved safety by inducing gas discharge in a specific direction.
KR20030066895A relates to a secondary battery provided to prevent the explosion caused by a gas or heat generated from the pyrolysis of electrolytes and to provide the sealing of electrode assembly.

### DISCLOSURE

### Technical Problem

The present disclosure is directed to providing a secondary battery with improved safety by inducing gas discharge in a specific direction when gas is generated while securing a sealing property when the battery operates normally.

### Technical Solution

In accordance with the independent claim 1, there are provided secondary batteries comprising:
an electrode assembly;
an electrode lead attached to the electrode assembly;
a case configured to accommodate the electrode assembly therein;
the case includes a sealing portion formed to seal the electrode assembly;
the sealing portion contains a sealant resin;
a lead film formed to surround a part of an outer surface of the electrode lead and interposed between the electrode lead and the case;
a vent region located in the sealing portion; and
a vent member inserted into the vent region and containing a linear low-density polyethylene having a comonomer with a carbon number of 6 or more,
wherein the vent member has a thickness of 50 µm or more and less than 200 µm;
wherein the linear low-density polyethylene of the vent member (15) has a lower melting point than the sealant resin.

The vent member may have a thickness of 50 µm to 100 µm.

The vent member may contain a linear low-density polyethylene having a comonomer with a carbon number of 6 to 8.

The vent member may melt at 100°C to 120°C to vent a gas.

The vent member may be vented at a pressure of 1.5 atm or above.

The vent member may have a maximum sealing strength of less than 58.8 N/15 mm (6 kgf/15 mm) at 100°C or above.

The vent member may have an average sealing strength of less than 44.1 N/15 mm (4.5 kgf/15 mm) at 100°C or above.

The vent member may have a maximum sealing strength of 58.8 N/15 mm (6 kgf/15 mm) or more at room temperature to 60°C.

The vent member may have an average sealing strength of 44.1 N/15 mm (4.5 kgf/15 mm) or more at room temperature to 60°C.

The linear low-density polyethylene may be polymerized in the presence of a metallocene catalyst.

A content of the comonomer with a carbon number of 6 or more may be 15 weight% or less, based on 100 weight% of the linear low-density polyethylene.

The linear low-density polyethylene may have a poly dispersity index (PDI) of 4 or less.

A difference between a crystallization temperature of the sealant resin and a crystallization temperature of the linear low-density polyethylene may be 10°C or less.

The linear low-density polyethylene may have a crystallization temperature of 90°C to 115°C.

The linear low-density polyethylene may have a melting point of 100°C to 130°C.

The linear low-density polyethylene may have a weight-average molecular weight of 100,000 g/mol to 400,000 g/mol.

The vent member may have a width narrowing along a protruding direction of the electrode lead.

The vent member may have any one of circular, oval, stepped, triangular and trapezoidal shapes.

The vent region may be located in the sealing portion at a corner of the case.

The secondary battery may be a pouch-type secondary battery.

### Advantageous Effects

The secondary battery according to an embodiment of the present disclosure includes a linear low-density polyethylene having a comonomer with a carbon number of 6 or more, and includes a vent member having a thickness of 50 µm or more and less than 200 µm, so as to secure sealing properties when the battery operates normally and to induce gas to be discharge to the vent region when gas is generated. Accordingly, the safety of the battery is improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view of a secondary battery according to an embodiment of the present disclosure.
FIG. 2 is a plan view of the secondary battery according to an embodiment of the present disclosure.
FIG. 3 is a diagram showing a state in which a vent occurs in the secondary battery according to an embodiment of the present disclosure.
FIG. 4 is a partially enlarged plan view showing a lead film and a vent member of a secondary battery according to another embodiment of the present disclosure.
FIG. 5 is a partially enlarged plan view showing a lead film and a vent member of a secondary battery according to another embodiment of the present disclosure.
FIG. 6 is a partially enlarged plan view showing a lead film and a vent member of a secondary battery according to another embodiment of the present disclosure.
FIG. 7 is a diagram showing a maximum sealing strength of the vent member at each temperature in the secondary batteries prepared according to Examples 1 and 2 and Comparative Examples 1 to 3. The diagram is showing values according to Table 1A in the unis of kgf/15 mm. The corresponding values in SI units are indicated in Table 1.
FIG. 8 is a diagram showing an average sealing strength of the vent member at each temperature in the secondary batteries prepared according to Examples 1 and 2 and Comparative Examples 1 to 3. The diagram is showing values according to Table 1A in the unis of kgf/15 mm. The corresponding values in SI units are indicated in Table 1.

### BEST MODE

Hereinafter, preferred embodiments of the present disclosure will be described in detail with reference to the accompanying drawings. Prior to the description, it should be understood that the terms used in the specification and the appended claims should be interpreted based on the meanings and concepts corresponding to technical aspects of the present disclosure on the basis of the principle that the inventor is allowed to define terms appropriately for the best explanation.

The description proposed herein is just a preferable example for the purpose of illustrations only, while the invention is defined by the appended claims.

A secondary battery according to an embodiment of the present disclosure includes an electrode assembly; an electrode lead attached to the electrode assembly; a case configured to accommodate the electrode assembly therein; a lead film formed to surround a part of an outer surface of the electrode lead ad interposed between the electrode lead and the case; a vent region formed in at least a part of the case; and a vent member inserted into the vent region and containing a linear low-density polyethylene having a comonomer with a carbon number of 6 or more, wherein the vent member has a thickness of 50 µm or more and less than 200µm.

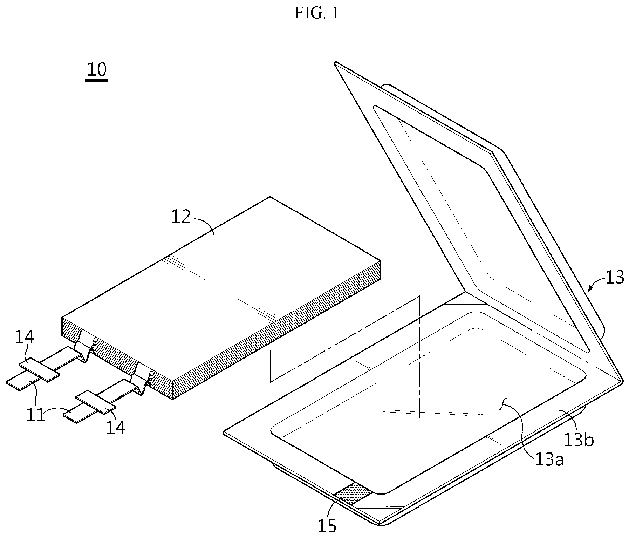

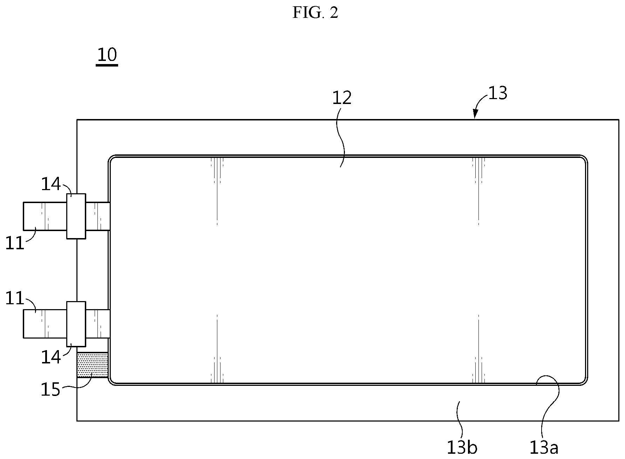

FIGS. 1 and 2 show a secondary battery 10 according to an embodiment of the present disclosure.

Referring to FIGS. 1 and 2, the secondary battery 10 includes an electrode assembly 12 to which an electrode lead 11 is attached, and a case 13.

The electrode assembly 12 includes a positive electrode plate, a negative electrode plate and a separator. In the electrode assembly 12, a positive electrode plate and a negative electrode plate may be sequentially laminated with a separator being interposed therebetween.

The positive electrode plate may include a positive electrode current collector made of a metal thin film having excellent conductivity - for example, an aluminum (Al) foil, and a positive electrode active material layer coated on at least one surface thereof. In addition, the positive electrode plate may include a positive electrode tab made of a metal material - for example, an aluminum (Al) material, at one side end thereof. The positive electrode tab may protrude from one side end of the positive electrode plate. The positive electrode tab may be welded to one side end of the positive electrode plate, or be bonded thereto using a conductive adhesive.

The negative electrode plate may include a negative electrode current collector made of a conductive metal thin film - for example, a copper (Cu) foil, and a negative electrode active material layer coated on at least one surface thereof. In addition, the negative electrode plate may include a negative electrode tab formed of a metal material - for example, a nickel (Ni) material, at one side end thereof. The negative electrode tab may protrude from one side end of the negative electrode plate. The negative electrode tab may be welded to one side end of the negative electrode plate, or be bonded thereto using a conductive adhesive.

The separator is interposed between the positive electrode plate and the negative electrode plate to electrically insulate the positive electrode plate and the negative electrode plate from each other. The separator may be a porous membrane so that lithium ions can pass between the positive electrode plate and the negative electrode plate. The separator may include, for example, a porous membrane using polyethylene (PE), or polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may be a jelly-roll (winding-type) electrode assembly having a structure in which long sheet-type positive and negative electrodes are wound with a separator being interposed therebetween, a stacked (stack-type) electrode assembly having a structure in which a plurality of positive and negative electrodes cut into units of a predetermined size are sequentially stacked with a separator being interposed therebetween, a stack/folding type electrode assembly having a structure in which bi-cells or full-cells where positive and negative electrodes of a predetermined unit are stacked with a separator being interposed therebetween are wound, or the like.

The case 13 serves to accommodate the electrode assembly 12.

In an embodiment of the present disclosure, the case 13 may include an accommodation portion 13a for accommodating the electrode assembly 12, and, according to the invention, includes a sealing portion 13b formed to seal the electrode assembly 12 as shown in FIG. 1.

The sealing portion 13b includes a sealant resin, and the sealant resin may be fused along an outer circumference of the accommodation portion 13a to seal the electrode assembly 12.

In an embodiment of the present disclosure, the case 13 may be provided in a film form having a multilayer structure including an outer layer for protection against external impacts, a metal barrier layer for blocking moisture, and a sealant layer for sealing the case.

The outer layer may include a polyester-based film using polyethylene terephthalate (PET), polybutylene terephthalate, polyethylene naphthalate, polybutylene naphthalate, copolyester, polycarbonate, nylon, or the like, and may be configured in a single layer or multiple layers.

The metal barrier layer may include aluminum, copper, or the like.

The sealant layer may include a sealant resin and may be formed in a single layer or multiple layers.

The sealant resin may include polypropylene (PP), acid-modified polypropylene (PPa), random polypropylene, ethylene propylene copolymer, or two or more thereof. The ethylene propylene copolymer may include, but is not limited to, ethylene-propylene rubber, ethylene-propylene block copolymer, and the like.

In an embodiment of the present disclosure, the case 13 may be in a pouch form.

The pouch-type case 13 may include an upper pouch and a lower pouch. When the case 13 includes an upper pouch and a lower pouch, after the upper pouch and the lower pouch are positioned so that the sealant resins thereof face each other, the facing sealant resins may be configured to be fused with each other by heat and pressure to seal the battery.

The fusion of the sealing portion 13b may be thermal fusion, ultrasonic fusion, or the like, but is not particularly limited as long as the sealing portion 13b can be fused.

The sealing portion 13b may be sealed on four or three peripheral sides of the battery case 13 in some embodiments. In the three-sided sealing structure, after the upper pouch and the lower pouch are formed on one pouch sheet, the boundary surface between the upper pouch and the lower pouch is bent so that the electrode assembly accommodation portions 13a formed on the upper pouch and the lower pouch overlap, and in this state, the edges of the remaining three sides are sealed except for the bending portion.

The electrode lead 11 may be accommodated in the case 13 so that a part thereof is exposed to the outside of the battery case 13 as shown in FIG. 1.

The secondary battery 10 according to an embodiment of the present disclosure includes a lead film 14.

The lead film 14 surrounds a part of the outer surface of the electrode lead 11 and is interposed between the electrode lead 11 and the case 13. For example, the lead film 14 may be interposed between the electrode lead 11 and the sealing portion 13b of the case 13 in a region where the electrode lead 11 protrudes or extends away from the case 13 to help binding of the electrode lead 11 and the case 13.

Referring to FIGS. 1 and 2, the secondary battery 10 according to an embodiment of the present disclosure may include a vent region (not shown) formed in at least a part of the case 13, and the vent member 15 may be inserted into the vent region. When thermal propagation occurs, the vent member 15 may induce gases to be discharged in a specific direction, thereby improving the safety of the battery.

The vent member 15 may be attached to the case 13 by thermal fusion. In another example, the vent member 15 may be attached to the case 13 by an adhesive such as glue. In another example, the vent member 15 and the case 13 may be physically coupled to each other by means of a clip or the like. In another example, at least a part of the vent member 15 may be embedded in a film constituting the case 13, for example a sealant resin.

The vent member 15 contains a linear low-density polyethylene having a comonomer with a carbon number of 6 or more. As the vent member 15 contains the linear low-density polyethylene having a comonomer with a carbon number of 6 or more, the sealing property of the case 13 is excellent in the normal temperature range, for example at room temperature to 60°C, and at a high temperature, for example as at 100°C or above, the vent sealing strength of the case in which the vent member 15 is inserted may be lowered, which may realize or cause venting.

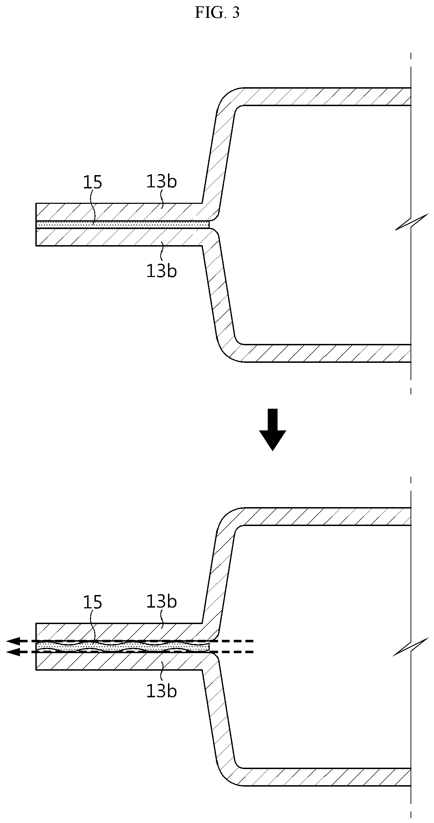

FIG. 3 is a diagram showing a state in which a vent occurs in the secondary battery according to an embodiment of the present disclosure. Specifically, FIG. 3 is a cross-sectional view showing the vent member in the secondary battery according to an embodiment of the present invention.

Referring to FIG. 3, at a temperature at which the battery normally operates, the vent member 15 serves to seal the case from the outside. If the temperature of the battery rises excessively due to abnormal operation of the battery, the vent member 15 melts and the sealing strength of the part of the vent member 15 in which the vent member 15 is inserted decreases. Therefore, gas may be discharged into this part. For example, as the pressure of the gas inside the battery is applied to the interface between the vent member 15 and the case, a gap is formed between the vent member 15 and the case, and the gas may be discharged thereto.

In an embodiment of the present disclosure, the vent member 15 may contain a linear low-density polyethylene having a comonomer with a carbon number of 6 to 8.

In accordance with the claimed invention, the linear low-density polyethylene having a comonomer with a carbon number of 6 or more has a lower melting point than the sealant resin. If the linear low-density polyethylene having a comonomer with a carbon number of 6 or more has a lower melting point than the sealant resin, the linear low-density polyethylene may melt faster than the sealant resin at high temperatures. As the sealing strength of the part in which the vent member 15 is inserted is lowered below the sealing strength of the part of the case containing the sealant resin, the vent characteristics may be more easily realized.

In an embodiment of the present disclosure, the linear low-density polyethylene having a comonomer with a carbon number of 6 or more may have a melting point of 100°C to 130°C, or 105°C to 125°C, or 110°C to 120°C. If the melting point of the linear low-density polyethylene having a comonomer with a carbon number of 6 or more satisfies the above-mentioned range, the sealing strength of the part of the case in which the vent member 15 is inserted may be lowered at a high temperature, for example 100°C or higher, so that the venting characteristic may be more easily implemented.

The melting point of the linear low-density polyethylene having a comonomer with a carbon number of 6 or more may be measured using a differential scanning calorimeter (DSC). For example, the temperature of a sample is increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the melting point may be measured by maintaining the temperature at 280°C for 10 minutes.

In an embodiment of the present disclosure, the linear low-density polyethylene having a comonomer with a carbon number of 6 or more may be polymerized in the presence of a metallocene catalyst. If the linear low-density polyethylene having a comonomer with a carbon number of 6 or more is polymerized in the presence of a metallocene catalyst, it may be more advantageous in terms of sealing strength and properties, compared to the case where it is polymerized in the presence of a Ziegler-Natta catalyst.

In an embodiment of the present disclosure, the content of the comonomer with a carbon number of 6 or more in the linear low-density polyethylene having a comonomer with a carbon number of 6 or more may be 15 weight% or less, or 12 weight% or less, or 11.8 weight% or less, or 10 weight% or less, or 9 weight% or less, or 8 weight% or less, or 7.6 weight% or less, based on 100 weight% of the linear low-density polyethylene having a comonomer with a carbon number of 6 or more. At the same time, it may be 5 weight% or more, or 7.6 weight% or more, or 8 weight % or more, or 9.0 weight% or more, or 10 weight% or more, or 11.8 weight% or more, or 12 weight% or more. If the content of the comonomer with a carbon number of 6 or more satisfies the above-mentioned range, it may be easy to ensure that the sealing strength is not lowered during normal operation of the battery due to a decreased packing density between molecules.

The content of the comonomer with a carbon number of 6 or more may be measured using an H-NMR. For example, after about 10 mg of a sample is completely dissolved in about 0.6 mL of trichloroethylene solvent using a heat gun, it may be sampled in an NMR tube and measured using the ¹H-NMR.

In an embodiment of the present disclosure, the linear low-density polyethylene having a comonomer with a carbon number of 6 or more may have a weight-average molecular weight of 100,000 g/mol to 400,000 g/mol, or 200,000 g/mol to 350,000 g/mol, or 230,000 g/mol to 300,000 g/mol. If the weight-average molecular weight of the linear low-density polyethylene having a comonomer with a carbon number of 6 or more satisfies the above-described range, the sealing strength with the sealant resin may be improved during normal operation of the battery.

In an embodiment of the present disclosure, the linear low-density polyethylene having a comonomer with a carbon number of 6 or more may have a poly dispersity index (PDI) of 4 or less, or 3.8 or less, or 3.796 or less, or 3.5 or less, or 3.023 or less, or 3 or less, or 2.7 or less, or 2.674 or less. In addition, the poly dispersity index (PDI) may be 1.0 or more. If the poly dispersity index of the linear low-density polyethylene having a comonomer with a carbon number of 6 or more satisfies the above range, the molecular weight distribution is narrow, so the sealing strength and the properties may be more excellent during normal operation of the battery.

The weight-average molecular weight and the poly dispersity index of the linear low-density polyethylene having a comonomer with a carbon number of 6 or more may be measured by gel permeation chromatography (GPC) under the following conditions:
- column: Tosoh, HLC-8321 GPC/HT
- solvent: TCB (Trichlorobenzene) + 0.04% BHT (after drying with 0.1% CaCl₂)
- flow velocity: 1.0 ml/min
- sample concentration: 1.5 mg/ml
- dose: 300 µl
- column temperature: 160°C
- Detector: RI detector
- Standard: Polystyrene (calibrated with a third-order function)

In an embodiment of the present disclosure, the crystallization temperature of the sealant resin and the crystallization temperature of the linear low-density polyethylene having a comonomer with a carbon number of 6 or more may be similar. For example, the difference between the crystallization temperature of the sealant resin and the crystallization temperature of the linear low-density polyethylene having a comonomer with a carbon number of 6 or more may be 10°C or less, or 5°C or less. In addition, the difference between the crystallization temperature of the sealant resin and the crystallization temperature of the linear low-density polyethylene having a comonomer with a carbon number of 6 or more may be 0.1°C or more. If the difference between the crystallization temperature of the sealant resin and the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristic during normal operation of the battery.

In an embodiment of the present disclosure, the linear low-density polyethylene having a comonomer with a carbon number of 6 or more may have a crystallization temperature of 90°C to 115°C, or 95°C to 110°C, or 100°C to 110°C, or 105°C to 110°C. If the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristics.

In an embodiment of the present disclosure, the difference between the crystallization temperature of the sealant resin and the crystallization temperature of the linear low-density polyethylene having a comonomer with a carbon number of 6 or more may be 10°C or less, and the crystallization temperature of the linear low-density polyethylene having a comonomer with a carbon number of 6 or more may be 90°C to 115°C.

The crystallization temperature may be measured using a differential scanning calorimeter (DSC). For example, the temperature of the sample may be increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the crystallization temperature may be measured by maintaining the temperature at 280°C for 10 minutes.

The vent member 15 has a thickness of 50 µm or more and less than 200 µm. As the thickness of the vent member 15 satisfies the above-mentioned range, it is possible to secure the sealing property of the battery during normal operation of the battery, for example at room temperature to 60°C. For example, it is possible to secure the sealing strength to the level of a conventional secondary battery during normal operation of the battery. In particular, it is possible to secure the sealing property of the battery at 60°C.

If the thickness of the vent member 15 is 200 µm or more, it is difficult to secure the sealing property of the battery during normal operation of the battery. In particular, it is difficult to secure the sealing property of the battery at 60°C. If the thickness of the vent member 15 is 200 µm or more, the sealing strength of the part of the case in which the vent member 15 is inserted during normal battery operation, for example at room temperature to 60°C, may be significantly low, compared to the case where the thickness of the vent member 15 is 50 µm or more and less than 200 µm. In particular, the sealing strength of the part of the case in which the vent member is inserted at 60°C may be significantly low, which may make it difficult to secure the sealing properties of the battery.

If the thickness of the vent member 15 is less than 50 µm, there is a risk of deformation of the vent member 15 in the process of fusing the vent member 15 with the case 13. Accordingly, the processing characteristics of the vent member 15 are remarkably deteriorated.

In an embodiment of the present disclosure, the thickness of the vent member 15 may be 50 µm to 100 µm. If the thickness of the vent member 15 satisfies the above range, the sealing property of the battery may be more easily secured during normal operation of the battery. In particular, the sealing property of the battery may be more easily secured at 60°C.

In an embodiment of the present disclosure, the vent member 15 may have a structure that is narrowed along the protruding direction of the electrode lead 11. The width of the vent member 15 may be narrowed continuously or discontinuously along the protruding direction of the electrode lead 11. If the vent member 15 has a structure that is narrowed along the protruding direction of the electrode lead 11, an exhaust angle of the vented gas is reduced to minimize the amount of gas vented toward the side portion of the electrode lead 11, thereby further improving the safety of the battery.

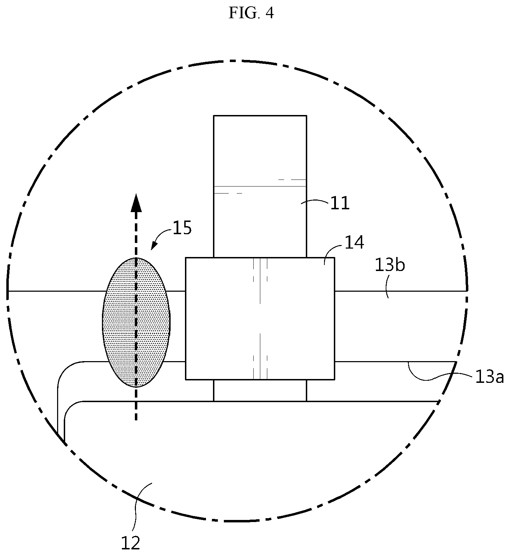

FIGS. 4 to 6 are partially enlarged views showing a lead film 14 and a vent member 15 in a secondary battery 10 according to other embodiments of the present disclosure.

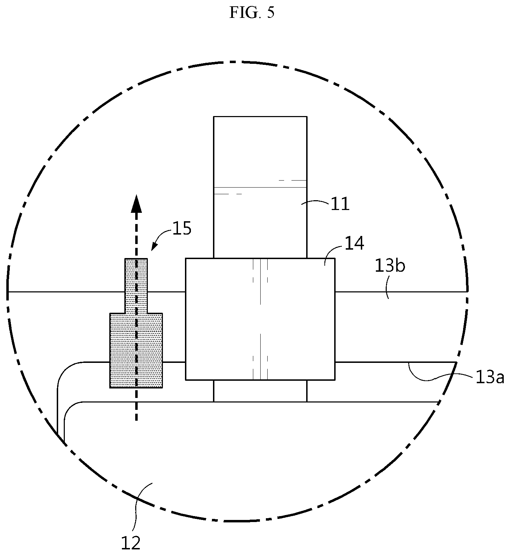

Referring to FIGS. 4 and 5, the vent member 15 may have, for example, an oval or a stepped shape. However, the shape of the vent member 15 may define other shapes such as a circle, a triangle, a trapezoid, etc.

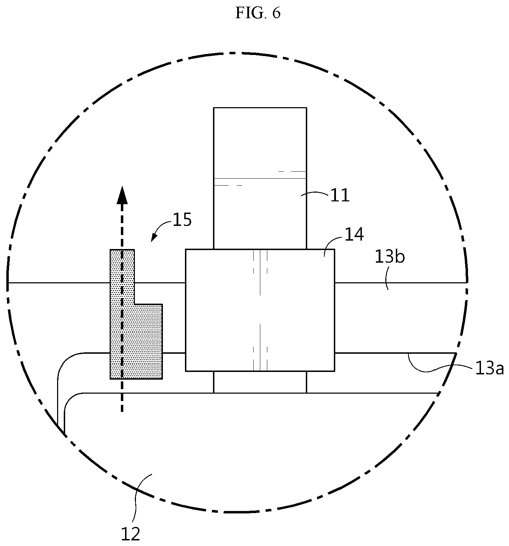

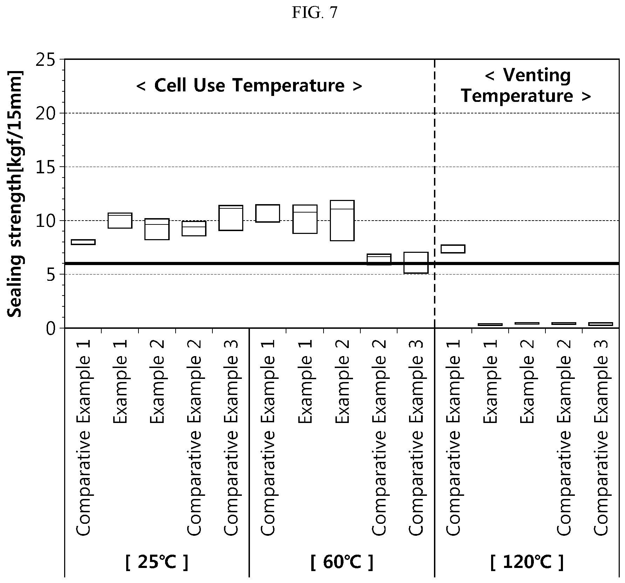

As shown in FIG. 6, the vent member 15 may be an asymmetric stepped structure. In the asymmetric stepped structure, an offset between the steps may be formed such that the direct contact between the vented gas and the electrode lead 11 can be minimized. For example, the size (exhaust angle of vented gases) and location (distance from electrode lead 11) of a discharge end of vent member 15 may be configured to minimize contact of the vented gases with electrode lead as best shown in FIG. 6. Thus, reducing the size of the discharge end of the vent member 15 to direct gases away from electrode lead 11 and locating the discharge end away from the electrode lead will minimize any contact between the vented gases and the electrode lead. In this case, an exhaust direction of the vented gas may be further separated from the side portion of the electrode lead 11 as shown in FIG. 7.

In an embodiment of the present disclosure, the vent member 15 may be vented at 100°C to 120°C to expel or exhaust gases from the accommodation portion to outside the secondary battery. In particular, the vent member 15 may be vented at a pressure of 100°C to 120°C and at a pressure of 1.5 atm or more. As the vent member 15 is vented in the aforementioned temperature range and/or the aforementioned pressure condition, it is possible to induce the gas to be discharged only during abnormal operation of the battery while allowing sealing of the battery during normal operation of the battery.

In an embodiment of the present disclosure, the vent member 15 may have a maximum sealing strength of less than 58.8 N/15 mm (6 kgf/15 mm) or less than 49.0 N/15 mm (5 kgf/15mm) or less than 44.1 N/15 mm (4.5 kgf/15mm) at 100°C or higher. In an embodiment of the present disclosure, the vent member 15 may have a maximum sealing strength of less than 58.8 N/15 mm (6 kgf/15 mm) or less than 49.0 N/15 mm (5 kgf/15mm) or less than 44.1 N/15 mm (4.5 kgf/15mm) at 100°C to 120°C. In an embodiment of the present disclosure, the vent member 15 may have a maximum sealing strength of less than 29.4 N/15 mm (3 kgf/15 mm) or less than 19.6 N/15 mm (2 kgf/15 mm) or less than 9.8 N/15 mm (1 kgf/15 mm) or less than 4.9 N/15 mm (0.5 kgf/15 mm) at 120°C or higher. If the vent member 15 satisfies the above-mentioned sealing strength in the above-mentioned temperature range, the sealing strength of the part of the case 13 in which the vent member 15 is inserted may be lowered at a high temperature, for example 100°C or higher, so that the vent characteristic may be readily implemented.

In an embodiment of the present disclosure, the vent member 15 may have a maximum sealing strength of 58.8 N/15 mm (6 kgf/15 mm) or more or 68.6 N/15 mm (7 kgf/15 mm) or more or 78.5 N/15 mm (8 kgf/15 mm) or more or 88.3 N/15 mm (9 kgf/15 mm) or more or 98.1 N/15 mm (10 kgf/15 mm) or more at room temperature to 60°C. If the vent member 15 satisfies the above-mentioned sealing strength in the above temperature range, even though the vent member 15 is inserted, the part of the case 13 in which the vent member 15 is inserted may have excellent sealing strength during normal operation of the battery, which may easily secure the sealing property of the battery.

In an embodiment of the present disclosure, the vent member 15 may have a maximum sealing strength of less than 58.8 N/15 mm (6 kgf/15 mm) at 100°C or higher. The vent member 15 may have a maximum sealing strength of 58.8 N/15 mm (6 kgf/15 mm) or more at room temperature to 60°C. If the vent member 15 satisfies the sealing strength described above, the sealing strength of the part of the case 13 in which the vent member 15 is inserted may be lowered at a high temperature, for example at 100°C or higher, so that the vent characteristic may be readily implemented. In addition, since the case 13 has excellent sealing strength during normal operation of the battery, the sealing property of the battery may be easily secured.

In an embodiment of the present disclosure, the vent member 15 may have an average sealing strength of less than 44.1 N/15 mm (4.5 kgf/15 mm) or less than 29.4 N/15 mm (3 kgf/15 mm) at 100°C or above. In an embodiment of the present disclosure, the vent member 15 may have an average sealing strength of less than 44.1 N/15 mm (4.5 kgf/15 mm) or less than 29.4 N/15 mm (3 kgf/15 mm) at 100°C to 120°C. In an embodiment of the present disclosure, the vent member 15 may have an average sealing strength of less than 19.6 N/15 mm (2 kgf/15 mm) or less than 9.8 N/15 mm (1 kgf/15 mm) or less than 4.9 N/15 mm (0.5 kgf/15 mm) at 120°C or higher. If the vent member 15 satisfies the above-mentioned sealing strength in the above-mentioned temperature range, the sealing strength of the part of the case 13 in which the vent member 15 is inserted may be lowered at a high temperature, for example at 100°C or higher, so that the vent characteristic may be implemented more easily.

In an embodiment of the present disclosure, the vent member 15 may have an average sealing strength of 44.1 N/15 mm (4.5 kgf/15 mm) or more or 49.0 N/15 mm (5 kgf/15 mm) or more or 58.8 N/15 mm (6 kgf/15mm) or more or 68.6 N/15 mm (7 kgf/15 mm) or more at room temperature to 60°C. If the vent member 15 satisfies the above-mentioned sealing strength in the above temperature range, even though the vent member 15 is inserted, the part of the case 13 in which the vent member 15 is inserted may have excellent sealing strength during normal operation of the battery, thereby easily securing the sealing property.

In an embodiment of the present disclosure, the vent member 15 may have an average sealing strength of less than 44.1 N/15 mm (4.5 kgf/15 mm) at 100°C or above. The vent member 15 may have an average sealing strength of 44.1 N/15 mm (4.5 kgf/15 mm) or more at room temperature to 60°C. If the vent member 15 has the above-mentioned sealing strength in the above-described temperature range, the sealing strength of the part of the case 13 in which the vent member 15 is inserted may be lowered at a high temperature, for example at 100°C or higher, so that the vent characteristic may be easily implemented. In addition, since excellent sealing strength may be secured during normal operation of the battery, the sealing property of the battery may be easily secured.

The sealing strength of the vent member 15 according to temperature may be measured by conducting a tensile test at a speed of 5 mm/min, after cutting the part of the case in which the vent member 15 is inserted into a width of 15 mm and a length of 5 cm and then gripping both ends thereof using a UTM jig in a state where both ends are spread to 180°.

At this time, the maximum sealing strength means a maximum value when the case 13 is broken, and the average sealing strength means an average value when the case 13 is stretched by 8 mm at 44.1 N/15 mm (4.5 kgf/15 mm) when the maximum sealing strength is 44.1 N/15 mm (4.5 kgf/15 mm) or more and an average value when the case 13 is stretched by 8 mm at the maximum sealing strength when the maximum sealing strength is less than 44.1 N/15 mm (4.5 kgf/15 mm).

In an embodiment of the present disclosure, as shown in FIGS. 1 and 2, the vent member 15 may be located in the sealing portion.

Referring to FIG. 2, the vent member 15 may be located in the sealing portion at a corner of the case. For example, the vent member 15 may be located at a corner of the sealing portion where the electrode lead 11 is exposed to the outside. Specifically, the vent member 15 may be located in the sealing portion next to the electrode lead 11, except for a region between the electrode leads 11. When the vent member 15 is located at the corner of the sealing portion where the electrode lead 11 is exposed to the outside, the amount of gas discharged toward the electrode lead 11 may be minimized, so that the safety of the battery may be further improved.

In an embodiment of the present disclosure, when the sealing portion 13b is sealed at three sides, the bent side of the case and one end of the vent member 15 may be in close contact.

In addition, the vent member 15 may be inserted into the case 13 so that the insertion length can be varied or the venting pressure and position can be controlled depending on the design. Here, the insertion length of the vent member 15 means a maximum value of the distance between one end and the other end of the vent member 15 based on the protruding direction of the electrode lead.

In an embodiment of the present disclosure, the insertion length of the vent member 15 may be smaller than the width of the sealing portion 13b. For example, the insertion length of the vent member 15 may be less than about 50% of the width of the sealing portion 13b. Here, the width of the sealing portion 13b means a maximum value of the distance between one end and the other end of the sealing portion 13b based on the protruding direction of the electrode lead 11.

In another embodiment of the present disclosure, the insertion length of the vent member 15 may be greater than the width of the sealing portion 13b. For example, the vent member 15 may be inserted from the accommodation portion 13a through the sealing portion 13b to be exposed to the outside of the case 13.

In an embodiment of the present disclosure, the vent member 15 may further include an adhesive layer for smoother placement.

In another embodiment of the present disclosure, the vent member 15 may be located in the sealing portion, except for the sealing portion where the electrode lead 11 is exposed to the outside.

In another embodiment of the present disclosure, the vent member 15 may be located in the sealing portion where the electrode lead 11 is exposed to the outside. For example, the vent member 15 may be positioned in the sealing portion between the electrode lead 11 and the electrode lead 11.

In an embodiment of the present disclosure, the vent member 15 may have a film shape.

In an embodiment of the present disclosure, the secondary battery may be a cylindrical, prismatic, or pouch-type secondary battery. Among them, the secondary battery may be a pouch-type secondary battery.

### MODE FOR DISCLOSURE

Hereinafter, the present disclosure will be explained in more detail with reference to exemplary embodiments. This disclosure may, however, be embodied in many different forms and should not be construed as limited to the exemplary embodiments set forth therein. It will be apparent that these exemplary embodiments are provided so that the present disclosure will be complete and understood easily by those skilled in the art.

### Example 1

An upper pouch and a lower pouch in which poly(ethylene terephthalate)/aluminum foil/polypropylene resin were sequentially laminated were placed so that the polypropylene resins thereof face each other, and then were accommodated in an electrode assembly in which a positive electrode, a separator and a negative electrode were stacked in order.

Then, a vent member containing linear low-density polyethylene (LG Chem, Lucene^{™}, SP311) having a comonomer with a carbon number of 6 polymerized in the presence of a metallocene catalyst having a thickness of 50 µm was inserted between the polypropylene resins, and then thermally fused to prepare a secondary battery.

### Example 2

A secondary battery was prepared in the same way as in Example 1, except that the thickness of the vent member containing linear low-density polyethylene (LG Chem, Lucene^{™}, SP311) having a comonomer with a carbon number of 6 polymerized in the presence of a metallocene catalyst is 100 µm.

### Comparative Example 1

An upper pouch and a lower pouch in which poly(ethylene terephthalate)/aluminum foil/polypropylene resin were sequentially laminated were placed so that the polypropylene resins thereof face each other, and then were accommodated in an electrode assembly in which a positive electrode, a separator and a negative electrode were stacked in order.

Then, the polypropylene resins were thermally fused to prepare a secondary battery.

### Comparative Example 2

A secondary battery was prepared in the same way as in Example 1, except that the thickness of the vent member containing linear low-density polyethylene (LG Chem, Lucene^{™}, SP311) having a comonomer with a carbon number of 6 polymerized in the presence of a metallocene catalyst is 200 µm.

### Comparative Example 3

A secondary battery was prepared in the same way as in Example 1, except that the thickness of the vent member containing linear low-density polyethylene (LG Chem, Lucene^{™}, SP311) having a comonomer with a carbon number of 6 polymerized in the presence of a metallocene catalyst is 300 µm.

### Evaluation Example 1: Measurement of a sealing strength according to temperature

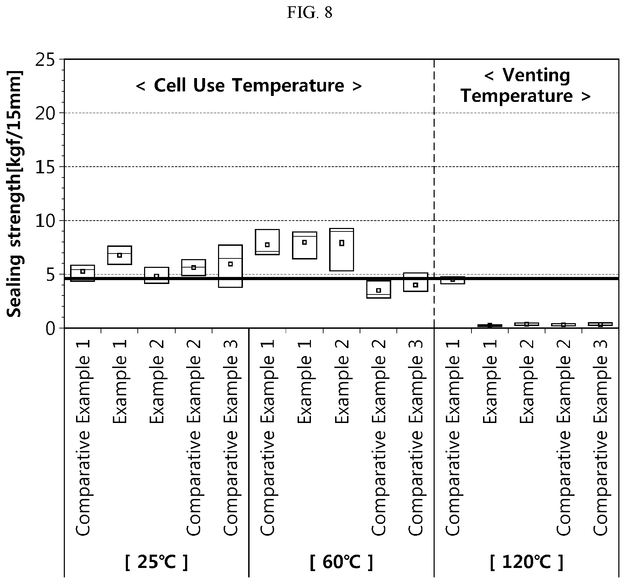

In the secondary batteries prepared in Examples 1 and 2 and Comparative Examples 2 to 3, a part of the case in which the vent member was inserted was cut to 15 mm in width and 5 cm in length at the following temperature, then both ends of the cut sample were opened at 180° and bite using a UTM jig, and then a tensile test was performed at a rate of 5 mm/min. The sealing strength of the case at this time is shown in Tables 1 and 1A below and FIGS. 7 to 8. The values of Table 1 are expressed in the units of N/15 mm while the values of Table 1A are expressed in the units of kgf/15 mm. The diagrams of Figs. 7 and 8 are only expressed in the units of kgf/15 mm and correspond to the values of Table 1A.

In the secondary battery prepared in Comparative Example 1, a part of the case corresponding to the sealing portion was cut to 15 mm in width and 5 cm in length at the following temperature, then both ends of the cut sample were at 180° and bite using a UTM jig, and then a tensile test was performed at a speed of 5 mm/min. The sealing strength of the case at this time is shown in Tables 1 and 1A below and FIGS. 7 to 8. The values of Table 1 are expressed in the units of N/15 mm while the values of Table 1A are expressed in the units of kgf/15 mm. The diagrams of Figs. 7 and 8 are only expressed in the units of kgf/15 mm and correspond to the values of Table 1A

At this time, the maximum sealing strength means a maximum value when the case is broken, and the average sealing strength means an average value when the case is stretched by 8 mm at 44.1 N/15 mm (4.5 kgf/15 mm) if the maximum sealing strength is 44.1 N/15 mm (4.5 kgf/15 mm) or more, and means an average value when the case is stretched by 8 mm at the maximum sealing strength if the maximum sealing strength is less than 44.1 N/15 mm (4.5 kgf/15 mm).

**Table 1 (in units of N/15 mm)**

| | | Example 1 | | Example 2 | | Comparative Example 1 | | Comparative Example 2 | | Comparative Example 3 | |
|---|---|---|---|---|---|---|---|---|---|---|---|
| | | Max | Ave | Max | Ave | Max | Ave | Max | Ave | Max | Ave |
| Sealing strength (N/15 mm) | Room temp. | 99.0 (±7.8) | 66.7 (±7.8) | 90.2 (±9.8) | 46.1 (±6.9) | 94.1 (±1.0) | 51.0 (±4.9) | 90.2 (±5.9) | 55.0 (±6.9) | 103.0 (±11.8) | 57.9 (±19.6) |
| | 60°C | 101.0 (±13.7) | 77.5 (±12.7) | 101.0 (±19.6) | 76.5 (±20.6) | 97.1 (±11.8) | 69.6 (±17.7) | 62.8 (±4.9) | 32.4 (±8.8) | 58.8 (±8.8) | 38.2 (±8.8) |
| | 120°C | 2.5 (±0.3) | 1.6 (±0.5) | 3.4 (±0.4) | 2.5 (±1.3) | 72.6 (±3.9) | 43.1 (±3.9) | 3.3 (±0.1) | 1.9 (±0.2) | 2.9 (±0.7) | 2.2 (±0.9) |

**Table 1A (in units of kgf/15 mm)**

| | | Example 1 | | Example 2 | | Comparative Example 1 | | Comparative Example 2 | | Comparative Example 3 | |
|---|---|---|---|---|---|---|---|---|---|---|---|
| | | Max | Ave | Max | Ave | Max | Ave | Max | Ave | Max | Ave |
| Sealing strength (kgf/15 mm) | Room temp. | 10.1 (±0.8) | 6.8 (±0.8) | 9.2 (±1.0) | 4.7 (±0.7) | 9.6 (±0.1) | 5.2 (±0.5) | 9.2 (±0.6) | 5.6 (±0.7) | 10.5 (±1.2) | 5.9 (±2.0) |
| | 60°C | 10.3 (±1.4) | 7.9 (±1.3) | 10.3 (±2.0) | 7.8 (±2.1) | 9.9 (±1.2) | 7.1 (±1.8) | 6.4 (±0.5) | 3.3 (±0.9) | 6.0 (±0.9) | 3.9 (±0.9) |
| | 120°C | 0.26 (±0.03) | 0.16 (±0.05) | 0.35 (±0.04) | 0.25 (±0.13) | 7.4 (±0.4) | 4.4 (±0.4) | 0.34 (±0.01) | 0.19 (±0.02) | 0.30 (±0.07) | 0.22 (±0.09) |

As can be seen in Tables 1 and 1A and FIGS. 7 to 8, it may be found that in the secondary batteries prepared in Examples 1 and 2, the maximum sealing strength and the average sealing strength of the part of the case in which the vent member is inserted at room temperature to 60°C are similar to the maximum sealing strength and the average sealing strength of the case of the secondary battery prepared in Comparative Example 1 at room temperature to 60°C. In addition, it may be found that in the secondary batteries prepared in Examples 1 and 2, the maximum sealing strength and the average sealing strength of the case in which the vent member is inserted at 100°C or above are significantly lower than the maximum sealing strength and the average sealing strength of the case of the secondary battery prepared in Comparative Example 1 at 100°C or above.

Accordingly, the secondary batteries having a vent member prepared in Examples 1 and 2 may secure proper sealing strength when the battery is operating normally, and when the battery is heated to a high temperature due to an abnormal phenomenon, gas may be discharged through the vent member whose sealing strength is weakened. Meanwhile, the secondary battery prepared in Comparative Example 1 may secure proper sealing strength when the battery is operating normally, but when the battery is heated to a high temperature due to an abnormal phenomenon, gas is discharged in an unspecified direction, which may cause chain ignition of batteries.

It was found that in the secondary batteries prepared in Comparative Examples 2 and 3, the maximum sealing strength and the average sealing strength of the part of the case in which the vent member was inserted at room temperature to 60°C, especially the maximum sealing strength and the average sealing strength at 60°C, were significantly lower than the maximum sealing strength and the average sealing strength of the part of the case in which the vent member is inserted according to the secondary batteries prepared in Examples 1 and 2 at room temperature to 60°C. From this, it was confirmed that the secondary batteries prepared in Comparative Examples 2 and 3 could not secure adequate sealing strength when the battery is operating normally.

## Claims

1. A secondary battery (10), comprising:
an electrode assembly (12);
an electrode lead (11) attached to the electrode assembly (12);
a case (13) configured to accommodate the electrode assembly (12) therein;
wherein the case (13) includes a sealing portion (13b) formed to seal the electrode assembly (12);
wherein the sealing portion (13b) contains a sealant resin;
a lead film (14) formed to surround a part of an outer surface of the electrode lead (11) and interposed between the electrode lead (11) and the case (13);
a vent region located in the sealing portion (13b); and
a vent member (15) inserted into the vent region and containing a linear low-density polyethylene having a comonomer with a carbon number of 6 or more,
wherein the vent member (15) has a thickness of 50 µm or more and less than 200 µm; and
wherein the linear low-density polyethylene of the vent member (15) has a lower melting point than the sealant resin.

2. The secondary battery according to claim 1,
wherein the vent member (15) has a thickness of 50 µm to 100 µm.

3. The secondary battery according to claim 1,
wherein the vent member (15) contains a linear low-density polyethylene having a comonomer with a carbon number of 6 to 8.

4. The secondary battery according to claim 1,
wherein the vent member (15) melts at 100°C to 120°C to vent a gas.

5. The secondary battery according to claim 1,
wherein the vent member (15) has a maximum sealing strength of less than 58.8 N/15 mm (6 kgf/15 mm) at 100°C or above.

6. The secondary battery according to claim 1,
wherein the vent member (15) has an average sealing strength of less than 44.1 N/15 mm (4.5 kgf/15 mm) at 100°C or above.

7. The secondary battery according to claim 1,
wherein a content of the comonomer with a carbon number of 6 or more is 15 weight% or less, based on 100 weight% of the linear low-density polyethylene.

8. The secondary battery according to claim 1,
wherein a difference between a crystallization temperature of the sealant resin and a crystallization temperature of the linear low-density polyethylene is 10°C or less.

9. The secondary battery according to claim 8,
wherein the linear low-density polyethylene has a crystallization temperature of 90°C to 115°C.

10. The secondary battery according to claim 1,
wherein the linear low-density polyethylene has a melting point of 100°C to 130°C.

11. The secondary battery according to claim 1,
wherein the vent member (15) has a width narrowing along a protruding direction of the electrode lead.

12. The secondary battery according to claim 1,
wherein the vent region is located in the sealing portion (13b) at a corner of the case (13).

13. The secondary battery according to claim 1,
wherein the secondary battery (10) is a pouch-type secondary battery.

## Patentansprüche

1. Sekundärbatterie (10), umfassend: eine Elektrodenanordnung (12); einen an der Elektrodenanordnung (12) angebrachten Elektrodenableiter (11); ein Gehäuse (13), das konfiguriert ist, um die Elektrodenanordnung (12) darin aufzunehmen; wobei das Gehäuse (13) einen Dichtungsabschnitt (13b) enthält, der ausgebildet ist, um die Elektrodenanordnung (12) abzudichten; wobei der Dichtungsabschnitt (13b) ein Dichtungsharz einschließt; eine Ableiterfolie (14), die ausgebildet ist, um einen Teil einer Außenfläche des Elektrodenableiters (11) zu umgeben, und zwischen dem Elektrodenableiter (11) und dem Gehäuse (13) angeordnet ist; einen Entlüftungsbereich, der sich in dem Dichtungsabschnitt (13b) befindet; und ein Entlüftungselement (15), das in den Entlüftungsbereich eingesetzt ist und ein lineares Polyethylen niederer Dichte mit einem Comonomer mit einer Kohlenstoffzahl von 6 oder mehr aufweist, wobei das Entlüftungselement (15) eine Dicke von 50 µm oder mehr und weniger als 200 µm aufweist; und wobei das lineare Polyethylen niederer Dichte des Entlüftungselements (15) einen niedrigeren Schmelzpunkt als das Dichtungsharz aufweist.

2. Sekundärbatterie nach Anspruch 1, wobei das Entlüftungselement (15) eine Dicke von 50 µm bis 100 µm aufweist.

3. Sekundärbatterie nach Anspruch 1, wobei das Entlüftungselement (15) ein lineares Polyethylen niederer Dichte mit einem Comonomer mit einer Kohlenstoffzahl von 6 bis 8 enthält.

4. Sekundärbatterie nach Anspruch 1, wobei das Entlüftungselement (15) bei 100 °C bis 120 °C schmilzt, um ein Gas abzulassen.

5. Sekundärbatterie nach Anspruch 1, wobei das Entlüftungselement (15) eine maximale Siegelfestigkeit von weniger als 58,8 N/15 mm (6 kgf/15 mm) bei 100 °C oder darüber aufweist.

6. Sekundärbatterie nach Anspruch 1, wobei das Entlüftungselement (15) eine durchschnittliche Siegelfestigkeit von weniger als 44,1 N/15 mm (4,5 kgf/15 mm) bei 100 °C oder darüber aufweist.

7. Sekundärbatterie nach Anspruch 1, wobei ein Gehalt des Comonomers mit einer Kohlenstoffzahl von 6 oder mehr 15 Gew.-% oder weniger beträgt, bezogen auf 100 Gew.-% des linearen Polyethylens niederer Dichte.

8. Sekundärbatterie nach Anspruch 1, wobei eine Differenz zwischen einer Kristallisationstemperatur des Dichtungsharzes und einer Kristallisationstemperatur des linearen Polyethylens niederer Dichte 10 °C oder weniger beträgt.

9. Sekundärbatterie nach Anspruch 8, wobei das lineare Polyethylen niederer Dichte eine Kristallisationstemperatur von 90 °C bis 115 °C aufweist.

10. Sekundärbatterie nach Anspruch 1, wobei das lineare Polyethylen niederer Dichte einen Schmelzpunkt von 100 °C bis 130 °C aufweist.

11. Sekundärbatterie nach Anspruch 1, wobei das Entlüftungselement (15) eine Breite aufweist, die sich entlang einer vorstehenden Richtung des Elektrodenableiters verengt.

12. Sekundärbatterie nach Anspruch 1, wobei sich der Entlüftungsbereich in dem Dichtungsabschnitt (13b) an einer Ecke des Gehäuses (13) befindet.

13. Sekundärbatterie nach Anspruch 1, wobei die Sekundärbatterie (10) eine Sekundärbatterie vom Pouch-Typ ist.

## Revendications

1. Batterie secondaire (10), comprenant :
un ensemble d'électrodes (12) ;
un conducteur d'électrode (11) fixée à l'ensemble d'électrodes (12) ;
un boîtier (13) configuré pour loger l'ensemble d'électrodes (12) à l'intérieur ;
dans laquelle le boîtier (13) inclut une partie de scellement (13b) formée pour sceller l'ensemble d'électrodes (12) ;
dans laquelle la partie de scellement (13b) contient une résine d'étanchéité ;
un film de conducteur (14) formé pour entourer une partie d'une surface extérieure du conducteur d'électrode (11) et interposé entre le conducteur d'électrode (11) et le boîtier (13) ;
une région d'évent située dans la partie de scellement (13b) ; et
un élément d'évent (15) inséré dans la région d'évent et contenant un polyéthylène linéaire à basse densité ayant un comonomère avec un nombre d'atomes de carbone de 6 ou plus,
dans laquelle l'élément d'évent (15) a une épaisseur de 50 µm ou plus et inférieure à 200 µm ; et
dans laquelle le polyéthylène linéaire à basse densité de l'élément d'évent (15) a un point de fusion inférieur à celui de la résine d'étanchéité.

2. Batterie secondaire selon la revendication 1, dans laquelle l'élément d'évent (15) a une épaisseur de 50 µm à 100 µm.

3. Batterie secondaire selon la revendication 1, dans laquelle l'élément d'évent (15) contient un polyéthylène linéaire à basse densité ayant un comonomère avec un nombre d'atomes de carbone de 6 à 8.

4. Batterie secondaire selon la revendication 1, dans laquelle l'élément d'évent (15) fond à 100°C à 120°C pour évacuer un gaz.

5. Batterie secondaire selon la revendication 1, dans laquelle l'élément d'évent (15) a une résistance au scellement maximale inférieure à 58,8 N/15 mm (6 kgf/15 mm) à 100°C ou plus.

6. Batterie secondaire selon la revendication 1, dans laquelle l'élément d'évent (15) a une résistance au scellement moyenne inférieure à 44,1 N/15 mm (4,5 kgf/15 mm) à 100°C ou plus.

7. Batterie secondaire selon la revendication 1, dans laquelle une teneur du comonomère avec un nombre d'atomes de carbone de 6 ou plus est de 15 % en poids ou moins, sur la base de 100 % en poids du polyéthylène linéaire à basse densité.

8. Batterie secondaire selon la revendication 1, dans laquelle une différence entre une température de cristallisation de la résine d'étanchéité et une température de cristallisation du polyéthylène linéaire à basse densité est de 10°C ou moins.

9. Batterie secondaire selon la revendication 8, dans laquelle le polyéthylène linéaire à basse densité a une température de cristallisation de 90°C à 115°C.

10. Batterie secondaire selon la revendication 1, dans laquelle le polyéthylène linéaire à basse densité a un point de fusion de 100°C à 130°C.

11. Batterie secondaire selon la revendication 1, dans laquelle l'élément d'évent (15) a une largeur se rétrécissant le long d'une direction de saillie du conducteur d'électrode.

12. Batterie secondaire selon la revendication 1, dans laquelle la région d'évent est située dans la partie de scellement (13b) au niveau d'un coin du boîtier (13).

13. Batterie secondaire selon la revendication 1, dans laquelle la batterie secondaire (10) est une batterie secondaire de type poche.
